# EUROPEAN PATENT SPECIFICATION

(11) **EP 2 703 807 B1**
(45) Date of publication and mention of the grant of the patent: **01.11.2023**
(21) Application number: 13182108.4
(22) Date of filing: 28.08.2013
(51) Int. Cl.: G01N 29/22, G01N 29/265, G01N 29/06

(54) **Ultrasonic array transducer holder and guide for flanges having cutouts and asymmetric geometry**
Ultraschallarraywandlerhalterung und -führung für Flansche mit Ausschnitten und asymmetrischer Geometrie
Support de réseau de transducteur ultraacoustique et guide pour rebords présentant des découpes et une géométrie asymétrique

(30) Priority: 31.08.2012 US 201213601612
(43) Date of publication of application: 05.03.2014
(73) Proprietor: The Boeing Company, Arlington, VA 22202 (US)
(72) Inventor: Anderson, Patrick L., Chicago, IL 60606-2016 (US); Fetzer, Barry A., Chicago, IL 60606-2016 (US)
(74) Representative: Howson, Richard Giles Bentham

(56) References cited:
- EP-A1- 2 703 807
- EP-A2- 2 472 254
- JP-A- H05 209 869
- US-A- 5 031 458
- US-A1- 2002 017 140
- US-A1- 2008 314 154
- US-A1- 2011 178 727

## Description

### BACKGROUND INFORMATION

### Field

Embodiments of the disclosure relate generally to the field of ultrasonic testing systems and more particularly to a manipulable holder for an ultrasonic array to accommodate scanning with the array on composite elements such as T-chords having flanges with cutouts and asymmetric geometry.

### Background

Ultrasonic scanning of composite parts is a key quality control capability. Imaging of surfaces is best conducted with scans along the surface in a substantially linear fashion. Where the ultrasonic array is not as wide as the surface to be scanned, multiple passes along the surface are required. Recording of accurate position information of the array during the scan is critical to obtain desired data coverage. The complexity of many composite parts makes alignment of the array in multiple scans challenging. With parts such as T-chords, the cap flange is likely to be asymmetric and typically has cutouts to accommodate mating components or required pass-throughs. Previous solutions have used the edge of the part being scanned to position the transducer with wide bases that span the largest cut out on the part. In the case of the composite T-Chords, employing the edge of the part and using these design features would force the transducer to rotate at various angles as the transducer scans down the length of the part. When using a rotary encoder that tracks the linear position along the scan, these non-normal angles of the transducer to the scan direction lead to positional errors in the ultrasonic data shown in the C Scan.

It is therefore desirable to provide a holder and guide for ultrasonic transducer arrays which provides accurate scanning placement for the array and further provides accurate position data for correlation of images taken during scanning.

US 2011/0178727 A1 in accordance with its abstract states an "Apparatus for nondestructive inspection of structural elements or workpieces, in particular those having an airfoil configuration, that moves a scanning sensor across the width (span) of a structural element or workpiece for the purpose of detecting structural damage. In one embodiment, the apparatus simultaneously traverses the length (chord) of the structural element or workpiece. In another embodiment, the apparatus includes a guide rail that encompasses the structural element or workpiece and the scanning sensor travels along the guide rail from a first location at an upper rear region, to the front, of the structural element or workpiece, and then around the leading edge toward the lower rear region. The apparatus includes a processor and a display device to display the processed, sensed, information.".

JP H05 209869 A in accordance with its abstract as translated states a "Purpose: To improve operation efficiency and also improve processing ability to save power by reducing time required for disassembly, assembly and preparation for installation."; and a constitution wherein "Opposite plate ends of a thick steel plate are used as rails or rails are provided on the plate ends wherein a pair of guide wheels are brought into rotating contact with the rails. A lateral beam coupled to the guide wheels driven in a running direction by a running driving part and also a flaw detecting head is driven in a lateral direction by a lateral driving part on the lateral beam. Flaw detection of the thick steel plate can be done on its entire surface or with predetermined pitch intervals sampled by controlling the driving of the running driving part and the lateral driving part. Since the plate edges are used as the rails or the rails if provided may be of a simple structure, installation of a flaw detector is easy.".

### SUMMARY

In an aspect, there is provided an ultrasonic inspection device for inspection of a T-chord, wherein the T-chord is a composite part and comprises a web, and a cap on the web, the cap having two flanges, the ultrasonic inspection device as defined in claim 1.

In another aspect, there is provided a method for ultrasonic inspection of a T-chord, wherein the T-chord is a composite part and comprises a web, and a cap having two flanges, the method as defined in claim 5.

The features, functions, and advantages that have been discussed can be achieved independently in various embodiments of the present disclosure or may be combined in yet other embodiments further details of which can be seen with reference to the following description and drawings.

### BRIEF DESCRIPTION OF THE DRAWINGS

FIG. 1A is a top view of an exemplary T-chord on which the embodiments disclosed herein may be employed;
FIG. 1B is a side section view of the T-chord of FIG. 1A;
FIG. 2 is a front view of an example embodiment engaged to a T-chord with the transducer array in a first scan position;
FIG. 3 is a top view of the embodiment;
FIG. 4 is a front view of the embodiment with the transducer array in a second scan position;
FIG. 5 is a top view of the embodiment with the transducer array in the second scan position;
FIG. 6 is a lower isometric view of the embodiment with the T-chord removed;
FIG. 7 is a bottom view of the embodiment with the T-chord removed;

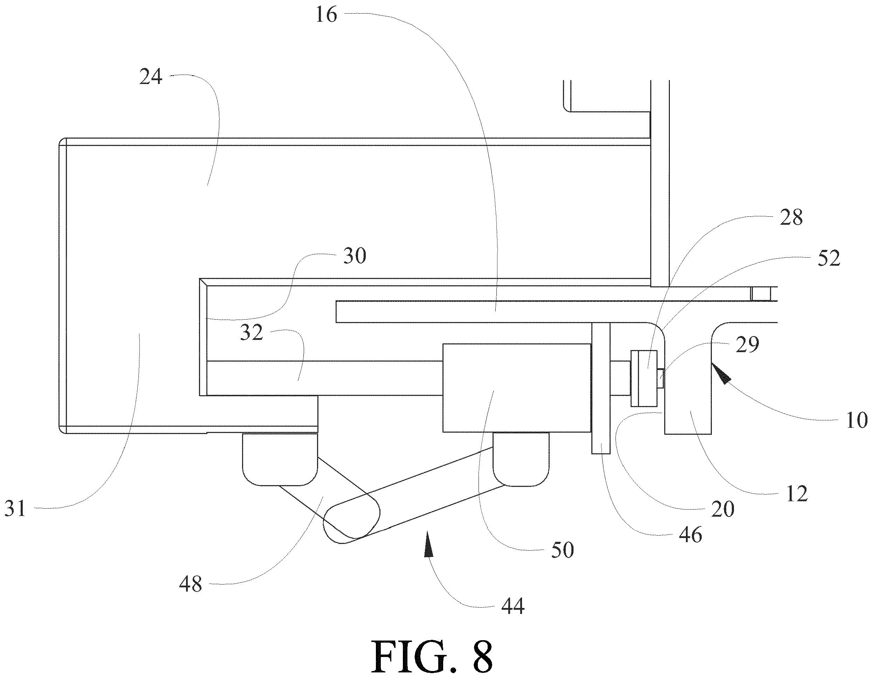

FIG. 8 is a detailed view of the position encoder assembly; and,
FIG. 9 is a flow chart showing operation of the embodiment for a C-scan of a T-chord.

### DETAILED DESCRIPTION

Embodiments disclosed herein provide a transducer incorporating an ultrasonic array and a positioner/holder having a base with a rail extending from the base to support the transducer in at least two lateral positions. A guide extends from the base for contact with a web of a composite shape. The guide maintains the rail substantially perpendicular to the web. An encoder is supported by the base and contacts a flange of the composite shape. The positioner/holder is adapted for longitudinal motion along the composite shape to create C-scans with the transducer without being impacted by asymmetric or irregular flange shapes or cutouts.

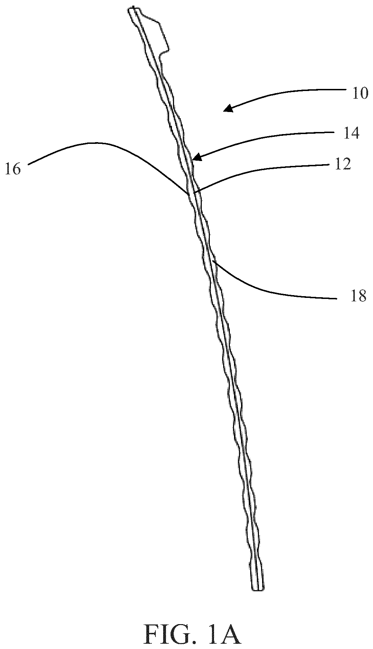

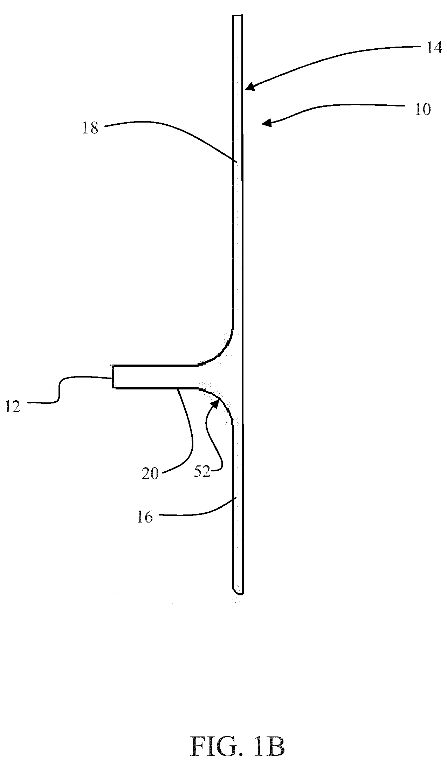

An example composite part on which the present embodiments may be employed is a T-chord 10 shown in FIGs. 1A and 1B. The T-chord has a web 12 and a cap 14 having an inner flange 16 and outer flange 18. A datum in the design of T-chords is a surface 20 of the web 12.

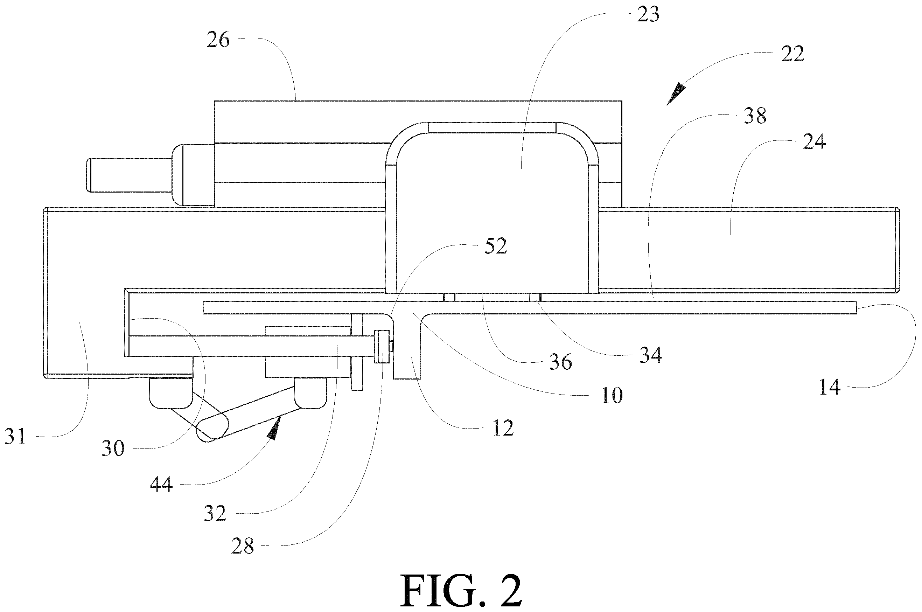

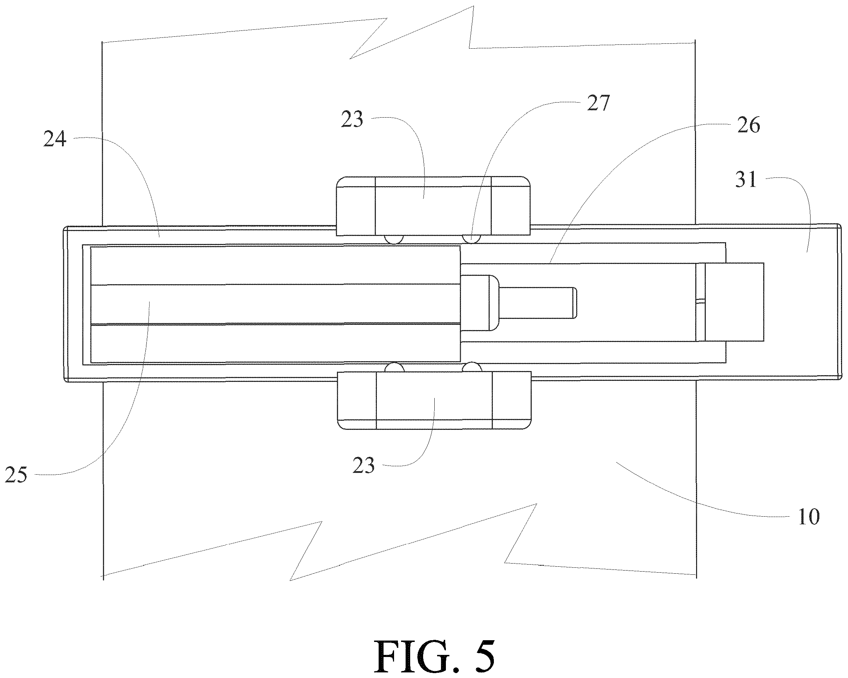

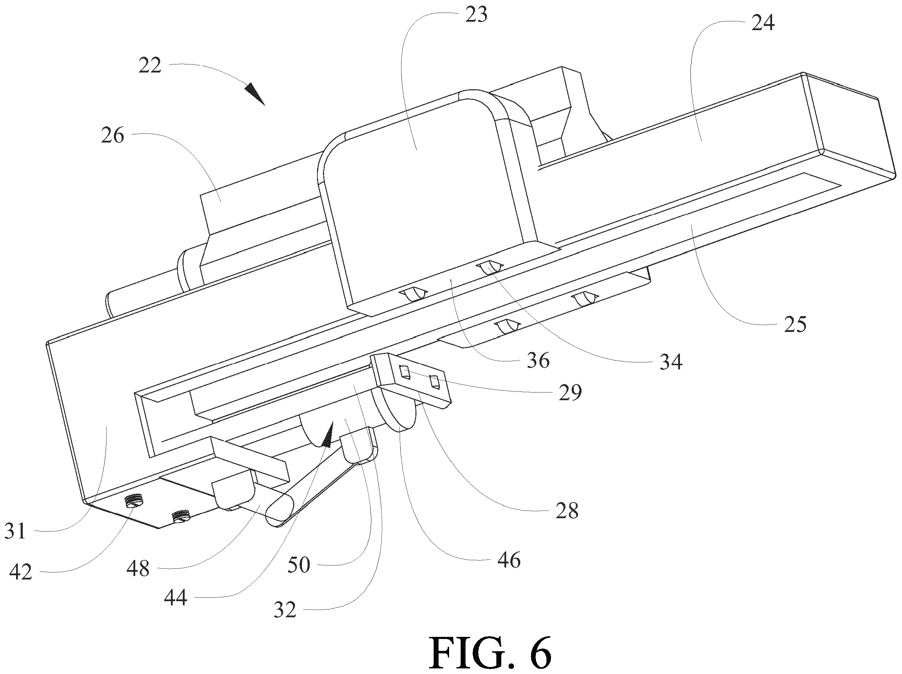

An example embodiment of a transducer positioner/holder 22 as shown in FIGs. 2 through 7 employs a support rail 24 for a transducer 26 housing an ultrasonic array, such as a 3.5L128-NW3 linear transducer from Olympus 48 Woerd Ave, Waltham, MA 02453, to obtain C-scan data. A guide 28 which rides on the surface 20 of the web 12 is used to position a near edge 30 of a base 31 of the transducer positioner/holder 22 a set distance laterally from the web. The positioner/holder 22 holds the tranducer 26 normal to the web as the transducer positioner/holder is scanned longitudinally along the part. The guide 28 extends from the near edge 30 mounted on positioning rods 32 extending from the base 31. The guide 28 is dimensioned longitudinally (along the web) with sufficient length to provide stable perpendicularity of the support rail 24 relative to the web during the longitudinal scan. Wheels 29 or similar bearing elements extending from the guide 28 (best seen in FIG. 6) provide low friction engagement on surface 20 of the web 12. Positioning the transducer 26 to be normal to the scan direction avoids positional errors in the ultrasonic data that may lead to indications being hidden or incorrectly sized in the C-scan presentation.

The ultrasonic array transducer 26 is adjustable on the support rail 24 for placement at different lateral positions along the length of the positioner/holder 22. Set screws, spring loaded detents or similar locking mechanisms may be employed to secure the transducer in position on the rail. In the embodiment in the drawings, an aperture 25 in the support rail provides a clear field for the acoustic array to interrogate the composite part being scanned. Support piers 23 extend from the support rail 24 substantially opposite the web of the T-chord being measured. The support piers may be movable with respect to the support rail for adjustment with respect to web location for differing T-chord profiles. In alternative embodiments, high friction rollers 27 or similar devices in the support piers may be employed to resistively secure the transducer against unwanted lateral motion yet allow desired positioning. The length of the positioner/holder allows the user to position the array in selected set positions, as exemplified by the transducer positions in FIGs. 2 and 3 and FIGs. 4 and 5 respectively, that are designed to ensure overlap between scans so that there is no missing data. This feature is analogous to the use of overlapping scans with a mechanical x-y gantry system.

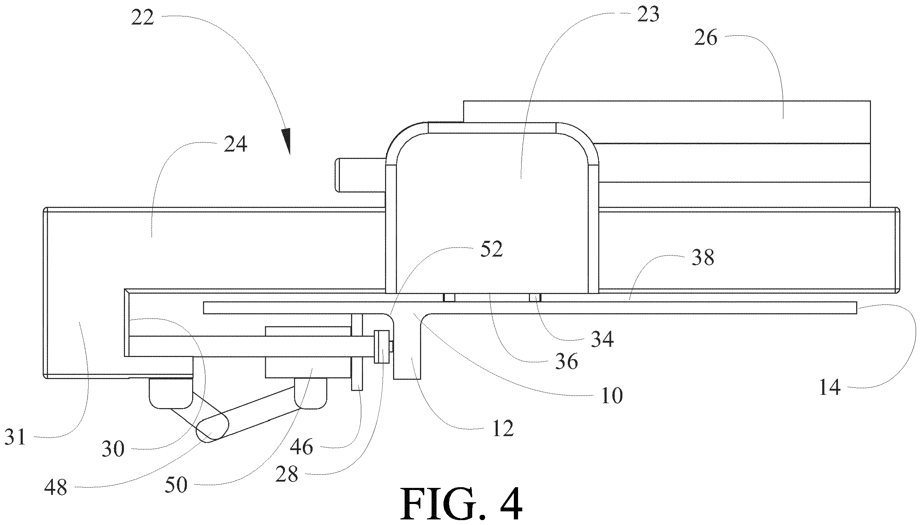

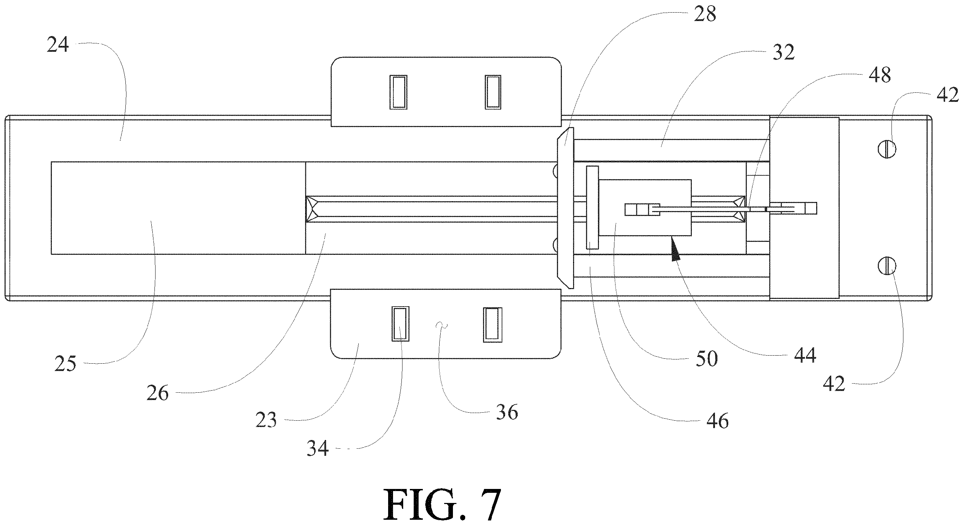

Scanning is accomplished by translation of the positioner/holder 22 longitudinally along the T-chord. Rollers 34 on a lower surface 36 of the support piers 23 extending from the support rail 24 (seen best in FIG.7) provide low friction engagement of a top surface 38 of the T-chord (seen in FIG. 2 and 4). Bearings or rollers may alternatively be contained in the bottom surface of the support rail 24.Positioning rods 32 for the guide 28 are telescopically adjustable through bores 40 in the base 31. Set screws 42 (best seen in FIGs. 6 and 70 are employed to lock the positioning rods at the desired extension.

A rotary encoder assembly 44 flexibly extends from the base 31 to be positioned with an encoder wheel 46 on the inner flange 16 of the T-chord 10. A flexing scissor bracket 48 connects an encoder 50 such as an Olympus Mini-Wheel Encoder, to the base 31 for lateral positioning of the encoder wheel 46 adjacent any radius 52 between the web 12 and inner flange 16 and to resiliently urge the encoder wheel into engagement with the inner flange.

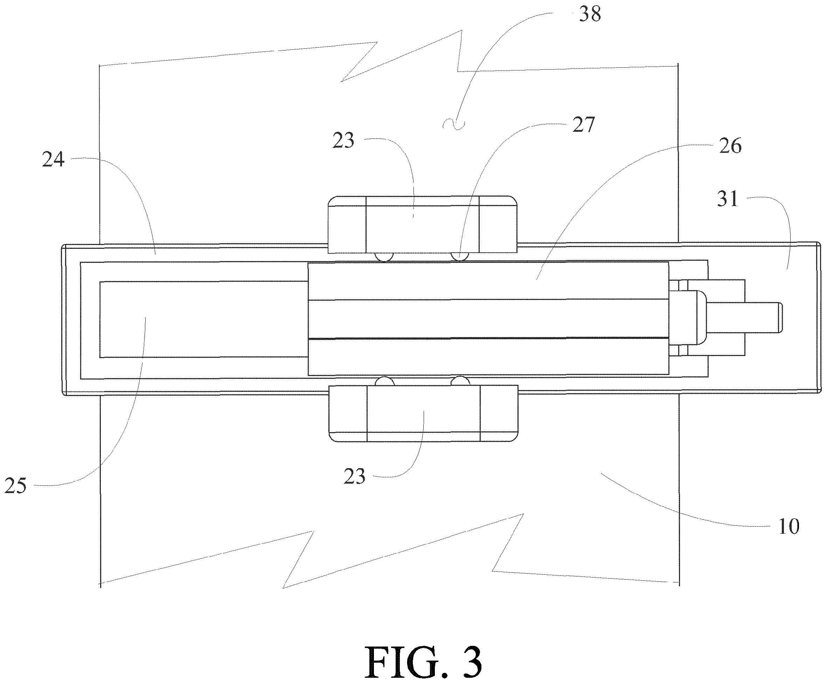

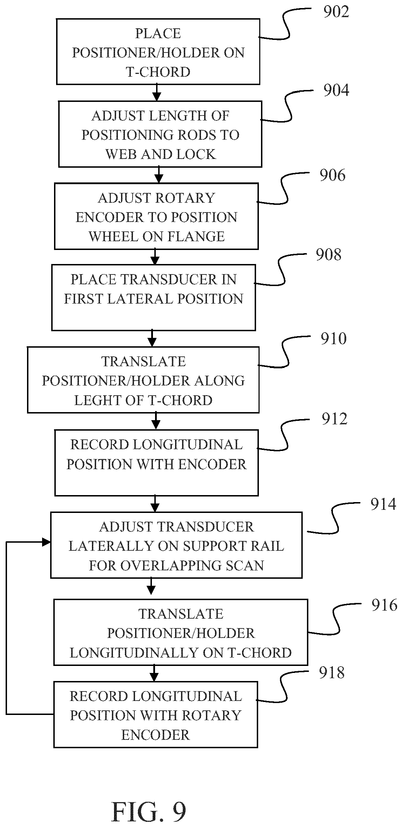

FIG. 9 describes the method employed for implementing measurements using the embodiment as described. In operation, positioner/holder 22 is placed on the top surface 38 of the T-chord, step 902. Positioning rods 32 are adjusted in length from the near edge 30 to place the guide 28 against the surface 20 of the web 12 with clearance for the inner flange 16 for the longitudinal scan and locked in place using set screws 42, step 904. The rotary encoder assembly 44 is adjusted using flexing scissor bracket 48 to position the encoder wheel 46 on the inner flange 16 adjacent the radius 52 from the web to the inner flange, step 906. The transducer 26 is positioned at a first position on the support rail 24 (as shown in FIGs. 2 and 3) for a first longitudinal scan, step 908. The positioner/holder 22 is then translated along the length of the T-chord, step 910. Longitudinal position of the positioner/holder 22 during the scan is recorded by the rotary encoder 50 for correlation of the data provided by the ultrasonic array in the transducer, step 912. The transducer 26 is then adjusted laterally on the support rail 24 for an overlapping scan, step 914. The positioner/holder 22 is again translated along the length of the T-chord, step 916, and the longitudinal position of the positioner/holder 22 during the scan is recorded by the rotary encoder 50 for correlation of the data provided by the ultrasonic array in the transducer. Steps 914, 916 and 918 may be repeated multiple times for wide flange sizes or overlapped scans as desired.

Having now described various embodiments of the disclosure in detail as required by the patent statutes, those skilled in the art will recognize modifications and substitutions to the specific embodiments disclosed herein. Such modifications are within the scope of the present disclosure as defined in the following claims.

## Claims

1. An ultrasonic inspection device for inspection of a T-chord (10), wherein the T-chord (10) is a composite part and comprises a web (12), and a cap (14) on the web (12), the cap (14) having two flanges (16, 18), the ultrasonic inspection device comprising:
a transducer (26) incorporating an ultrasonic array;
a positioner/holder (22) having
a base (31);
a rail (24) extending from the base (31) to support the transducer (26) in at least two lateral positions;
a guide (28) extending from the base (31) and arranged to contact the web (12), said guide (28) maintaining the rail (24) substantially perpendicular to the web (12), wherein
the guide (28) is supported from the base (31) by at least one adjustable length positioning rod (32), wherein
the at least one adjustable length positioning rod (32) is adjustable in length from a near edge (30) of the base (31) to place the guide (28) against a surface (20) of the web (12);
an encoder (50) supported by the base (31) and contacting a flange (16);
said positioner/holder (22) adapted for longitudinal motion along the T-chord (10); and
support piers (23) extending from the rail (24) and incorporating wheels (29) riding on and aligned longitudinally with a top surface (38) of the cap (14).

2. The ultrasonic inspection device as defined in claim 1 wherein the encoder (50) employs an encoder wheel (46) riding on a lower surface (36) of the flange (16).

3. The ultrasonic inspection device as defined in claim 2 wherein the encoder (50) is connected to the base (31) with an adjustable scissor bracket (48), said scissor bracket (48) positioning the encoder wheel (46) adjacent the web (12) clear of a radius (52).

4. The ultrasonic inspection device as defined in claim 1 wherein the support piers (23) are movable with respect to the rail (24) to be positioned substantially opposite the web (12).

5. A method for ultrasonic inspection of a T-chord (10), wherein the T-chord (10) is a composite part and comprises a web (12), and a cap (14) having two flanges (16, 18), the method comprising:
providing a positioner/holder (22) having a base (31);
mounting an ultrasonic transducer on a rail (24) extending from the base (31) of the positioner/holder (22) to support the transducer in at least two lateral positions;
positioning the positioner/holder (22) with a guide (28) for contact with the web (12) on the T-chord (10), wherein
the guide (28) extends from the base (31) and is supported from the base (31) by at least one adjustable length positioning rod (32), wherein
the at least one adjustable length positioning rod (32) is adjustable in length from a near edge (30) of the base (31) to place the guide (28) against a surface (20) of the web (12), the guide maintaining the rail (24) substantially perpendicular to the web (12);
translating the positioner/holder (22) longitudinally along the T-chord (10) with the ultrasonic transducer in a first lateral position on the rail (24);
encoding the longitudinal position of the positioner/holder (22) during the longitudinal translation with an encoder wheel (46) engaging a flange (16) of the T-chord (10);
moving the ultrasonic transducer to a second lateral position on the rail (24);
repeating the longitudinal translation of the positioner/holder (22) along the T-chord (10); and
encoding the longitudinal position of the positioner/holder (22) with the encoder wheel (46) during the repeating longitudinal translation.

6. The method of claim 5 further comprising:
moving the ultrasonic transducer to additional lateral positions on the rail (24); and
repeating the longitudinal translation of the positioner/holder (22) along the T-chord (10); and,
encoding the longitudinal position of the positioner/holder (22) with the encoder (46) wheel during the repeating longitudinal translation.

## Patentansprüche

1. Ultraschallprüfvorrichtung zur Prüfung eines T-Gurts (10), wobei der T-Gurt (10) ein Verbundteil ist und einen Steg (12) und eine Abdeckplatte (14) auf dem Steg (12) aufweist, wobei die Abdeckplatte (14) zwei Flansche (16, 18) hat, wobei die Ultraschallprüfvorrichtung Folgendes aufweist:
einen Wandler (26), der eine Ultraschallanordnung enthält;
einen Positionierer/Halter (22) mit
einer Basis (31);
einer Schiene (24), die sich von der Basis (31) erstreckt, um den Wandler (26) in mindestens zwei seitlichen Positionen zu tragen;
einer Führung (28), die sich von der Basis (31) erstreckt und so angeordnet ist, dass sie den Steg (12) kontaktiert, wobei die Führung (28) die Schiene (24) im Wesentlichen senkrecht zum Steg (12) hält, wobei
die Führung (28) von der Basis (31) durch mindestens eine längenverstellbare Positionierungsstange (32) getragen wird, wobei
die mindestens eine längenverstellbare Positionierungsstange (32) von einer nahen Kante (30) der Basis (31) aus in der Länge verstellbar ist, um die Führung (28) gegen eine Fläche (20) des Stegs (12) zu platzieren;
einem Encoder (50), der von der Basis (31) getragen wird und einen Flansch (16) kontaktiert;
wobei der Positionierer/Halter (22) für eine Längsbewegung entlang des T-Gurts (10) ausgelegt ist; und
Stützpfeiler (23), die sich von der Schiene (24) erstrecken und Räder (29) enthalten, die auf einer Oberseite (38) der Abdeckplatte (14) laufen und in Längsrichtung mit dieser ausgerichtet sind.

2. Ultraschallprüfvorrichtung nach Anspruch 1, wobei der Encoder (50) ein Encoderrad (46) nutzt, das auf einer unteren Fläche (36) des Flansches (16) läuft.

3. Ultraschallprüfvorrichtung nach Anspruch 2, wobei der Encoder (50) mit der Basis (31) mit einem einstellbaren Scherenbügel (48) verbunden ist, wobei der Scherenbügel (48) das Encoderrad (46) angrenzend an den Steg (12) beabstandet von einer Rundung (52) positioniert.

4. Ultraschallprüfvorrichtung nach Anspruch 1, wobei die Stützpfeiler (23) in Bezug auf die Schiene (24) beweglich sind, um im Wesentlichen gegenüber dem Steg (12) positioniert zu werden.

5. Verfahren zur Ultraschalluntersuchung eines T-Gurts (10), wobei der T-Gurt (10) ein Verbundteil ist und einen Steg (12) und eine Abdeckplatte (14) mit zwei Flanschen (16, 18) aufweist, wobei das Verfahren Folgendes aufweist:
Bereitstellen eines Positionierers/Halters (22) mit einer Basis (31);
Montieren eines Ultraschallwandlers an einer Schiene (24), die sich von der Basis (31) des Positionierers/Halters (22) erstreckt, um den Wandler in mindestens zwei seitlichen Positionen zu tragen;
Positionieren des Positionierers/Halters (22) mit einer Führung (28) für den Kontakt mit dem Steg (12) an dem T-Gurt (10), wobei
sich die Führung (28) von der Basis (31) erstreckt und von der Basis (31) durch mindestens eine längenverstellbare Positionierungsstange (32) getragen wird, wobei die mindestens eine längenverstellbare Positionierungsstange (32) von einer nahen Kante (30) der Basis (31) aus in der Länge verstellbar ist, um die Führung (28) gegen eine Oberfläche (20) des Stegs (12) zu platzieren, wobei die Führung die Schiene (24) im Wesentlichen senkrecht zu dem Steg (12) hält;
Verschieben des Positionierers/Halters (22) in Längsrichtung entlang des T-Gurts (10), wobei sich der Ultraschallwandler in einer ersten seitlichen Position auf der Schiene (24) befindet;
Codieren der Längsposition des Positionierers/Halters (22) während der Längsverschiebung mit einem Encoderrad (46), das in einen Flansch (16) des T-Gurts (10) eingreift;
Bewegen des Ultraschallwandlers zu einer zweiten seitlichen Position auf der Schiene (24);
Wiederholen der Längsverschiebung des Positionierers/Halters (22) entlang des T-Gurts (10); und
Codieren der Längsposition des Positionierers/Halters (22) mit dem Encoderrad (46) während der wiederholten Längsverschiebung.

6. Verfahren nach Anspruch 5, ferner aufweisend:
Bewegen des Ultraschallwandlers zu zusätzlichen seitlichen Positionen auf der Schiene (24); und
Wiederholen der Längsverschiebung des Positionierers/Halters (22) entlang des T-Gurts (10); und
Codieren der Längsposition des Positionierers/Halters (22) mit dem Encoderrad (46) während der wiederholten Längsverschiebung.

## Revendications

1. Dispositif d'inspection par ultrasons pour l'inspection d'une corde en τ (10), dispositif dans lequel la corde en T (10) est une pièce composite et comprend une âme (12) et un capuchon (14) sur l'âme (12), le capuchon (14) ayant deux brides (16, 18), le dispositif d'inspection par ultrasons comprenant :
un transducteur (26) intégrant un réseau ultrasonique ;
un positionneur/support (22) ayant :
une base (31) ;
un rail (24) s'étendant à partir de la base (31) pour supporter le transducteur (26) dans au moins deux positions latérales ;
un guide (28) s'étendant à partir de la base (31) et agencé pour être au contact de l'âme (12), ledit guide (28) maintenant le rail (24) pratiquement perpendiculaire à l'âme (12), dispositif dans lequel :
le guide (28) est supporté à partir de la base (31) par au moins une tige de positionnement (32) de longueur réglable, dispositif dans lequel :
l'au moins une tige de positionnement (32) de longueur réglable est réglable en longueur à partir d'un bord proche (30) de la base (31), afin de placer le guide (28) contre une surface (20) de l'âme (12) ;
un codeur (50) supporté par la base (31) et se trouvant au contact d'une bride (16) ;
ledit positionneur/support (22) étant adapté pour un déplacement longitudinal le long de la corde en T (10) ; et
des piliers de support (23) s'étendant à partir du rail (24) et intégrant des roues (29) qui roulent sur ledit rail et sont alignées longitudinalement avec une surface de dessus (38) du capuchon (14).

2. Dispositif d'inspection par ultrasons selon la revendication 1, dans lequel le codeur (50) utilise une roue codeuse (46) roulant sur une surface inférieure (36) de la bride (16).

3. Dispositif d'inspection par ultrasons selon la revendication 2, dans lequel le codeur (50) est connecté à la base (31) avec un support articulé de type ciseaux (48) réglable, ledit support articulé de type ciseaux (48) positionnant la roue codeuse (46) de façon adjacente à l'âme (12) dégagée d'un rayon (52).

4. Dispositif d'inspection par ultrasons selon la revendication 1, dans lequel les piliers de support (23) sont mobiles par rapport au rail (24), pour être positionnés pratiquement à l'opposé de l'âme (12).

5. Procédé pour l'inspection par ultrasons d'une corde en T (10), procédé dans lequel la corde en T (10) est une pièce composite et comprend une âme (12) et un capuchon (14) ayant deux brides (16, 18), le procédé comprenant :
la fourniture d'un positionneur/support (22) ayant une base (31) ;
le montage d'un transducteur à ultrasons sur un rail (24) s'étendant à partir de la base (31) du positionneur/support (22), afin de supporter le transducteur dans au moins deux positions latérales ;
le positionnement du positionneur/support (22) avec un guide (28) pour être au contact de l'âme (12) sur la corde en τ (10), procédé dans lequel :
le guide (28) s'étend à partir de la base (31) et est supporté à partir de la base (31) par au moins une tige de positionnement (32) de longueur réglable, procédé dans lequel :
l'au moins une tige de positionnement (32) de longueur réglable est réglable en longueur à partir d'un bord proche (30) de la base (31), afin de placer le guide (28) contre une surface (20) de l'âme (12), le guide maintenant le rail (24) pratiquement perpendiculaire à l'âme (12) ;
le déplacement par translation du positionneur/support (22) longitudinalement le long de la corde en T (10), le transducteur à ultrasons se trouvant dans une première position latérale sur le rail (24) ;
le codage de la position longitudinale du positionneur/support (22) au cours de la translation longitudinale, ledit codage étant effectué avec une roue codeuse (46) engageant une bride (16) de la corde en T (10) ;
le déplacement du transducteur à ultrasons jusqu'à une deuxième position latérale sur le rail (24) ;
la répétition de la translation longitudinale du positionneur/support (22) le long de la corde en T (10) ; et
le codage de la position longitudinale du positionneur/support (22) avec la roue codeuse (46) au cours de la répétition de la translation longitudinale.

6. Procédé selon la revendication 5, comprenant en outre :
le déplacement du transducteur à ultrasons vers des positions latérales supplémentaires sur le rail (24) ; et
la répétition de la translation longitudinale du positionneur/support (22) le long de la corde en T (10) ; et
le codage de la position longitudinale du positionneur/support (22) avec la roue codeuse (46) au cours de la répétition de la translation longitudinale.
